# EUROPEAN PATENT APPLICATION

(11) **EP 0 987 910 A2**
(43) Date of publication of application: **22.03.2000**
(21) Application number: 99118204.9
(22) Date of filing: 13.09.1999
(51) Int. Cl.: H04Q 7/22

(54) **Bidirectional information system and servicing method thereof**

(30) Priority: 14.09.1998 KR 9837769
(71) Applicant: SAMSUNG ELECTRONICS CO., LTD., Suwon-City, Kyungki-do (KR)
(72) Inventor: Lee, Jae-heu, Suwon-city, Kyungki-do (KR); Jung, Se-young, Jangan-gu, Suwon-city, Kyungki-do (KR)
(74) Representative: Grünecker, Kinkeldey, Stockmair & Schwanhäusser Anwaltssozietät

(57) **Abstract**

A bidirectional information transmitting and receiving system and a servicing method thereof are provided. The bidirectional information transmitting and receiving system includes an information center for collecting, processing, and then transmitting predetermined information provided from the outside in response to an information request signal, an information terminal for outputting the information request signal to the information center and for searching for information received from the information center, a mobile communication terminal for performing wireless communication with the information center through a mobile communication line to transmit or receive information to or from the information center, and a communication adaptor for relaying information between the mobile communication terminal and the information terminal. According to the present invention, it is possible to maximize the efficiency of a user since it is possible to conveniently use all the information provided by the bidirectional information transmitting and receiving system.

## Description

### BACKGROUND OF THE INVENTION

### 1. Field of the Invention

The present invention relates to an information transmitting and receiving system, and more particularly, to a bidirectional information transmitting and receiving system between an information center which collects and provides information and a vehicle which requests and uses the information.

### 2. Description of the Related Art

In a modern vehicle society, traffic information has an important role in economic activities or personal life. Therefore, the gain and use of information at a fixed location such as an office or at home are universal. However, when a user leaves the fixed location, it is difficult to obtain information.

Economic and cultural activities are limited by one's ability to obtain and use information. Therefore, it should be possible to obtain desired information and to use the obtained information anytime and anywhere.

However, in the case of a means of transportation used for moving from one fixed location to another fixed location, it is difficult to access desired information. In particular, it is difficult to easily use desired information in a car which is a major means of transportation. Time taken to move to another space increases as traffic circumstances become poorer. In order to overcome this problem, unidirectional transmission of information using radio or television broadcasting, a wireless pager or a mobile communication terminal, is performed. However, it is difficult to obtain and use desired information anytime and anywhere.

In Japan, the traffic information system is different from that of the information for personal use. The traffic information is unidirectionally received through a receiver by frequency modulation (FM) multiplex broadcasting. Therefore, it is not possible to obtain and use information united into a system and to obtain necessary information and to use the information anytime and anywhere, due to separation from the necessary information during movement.

### SUMMARY OF THE INVENTION

It is an object of the present invention to provide a bi-directional information transmitting and receiving system by which it is possible to transmit and receive information between an information center and a vehicle.

It is another object of the present invention to provide a servicing method of the bi-directional information transmitting and receiving system.

Accordingly, to achieve the first object, there is provided a bidirectional information transmitting and receiving system, comprising an information center for collecting, processing, and then transmitting predetermined information provided from the outside in response to an information request signal, an information terminal for outputting the information request signal to the information center and for searching for information received from the information center, a mobile communication terminal for performing wireless communication with the information center through a mobile communication line to transmit or receive information to or from the information center, and a communication adaptor for relaying information between the mobile communication terminal and the information terminal.

To achieve the second object, there is provided a bidirectional information transmitting and receiving method in a bidirectional information system comprising an information terminal for searching traffic information and predetermined information, an information center for collecting, processing, and transmitting information, a mobile communication terminal for transmitting and receiving wireless communication and information through a mobile telephone line, and a communication adaptor for relaying information between the mobile communication terminal and the information terminal, comprising the steps of outputting an intrinsic ID and a search information request signal operated in the information terminal to the communication adaptor and relaying request information corresponding thereto, transmitting the ID and the search information request signal relayed by the communication adaptor, through the mobile communication terminal to the information center, searching for information corresponding to the transmitted intrinsic ID and the information request signal, processing the searched information to a signal format, and transmitting the formatted signal to the mobile communication terminal corresponding to the intrinsic ID, and transmitting the information received from the mobile communication terminal to the communication adaptor, converting the information into a communication protocol of the information terminal, and outputting information converted into the communication protocol to the screen and the speaker of the information terminal.

### BRIEF DESCRIPTION OF THE DRAWINGS

The above objects and advantages of the present invention will become more apparent by describing in detail a preferred embodiment thereof with reference to the attached drawings in which:
FIG. 1 is a block diagram showing the structure of a bi-directional transmitting and receiving system according to the present invention; and
FIG. 2 is a detailed diagram of FIG. 1.

### DESCRIPTION OF THE PREFERRED EMBODIMENTS

Hereinafter, the present invention will be described in detail with reference to the attached drawings.

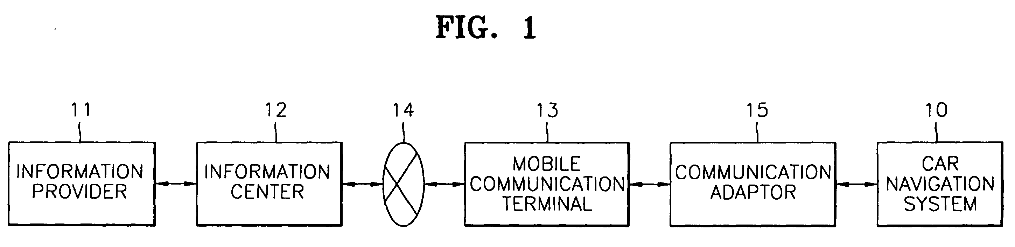

FIG. 1 is a block diagram showing the structure of a bi-directional information transmitting and receiving system according to the present invention.

The system shown in FIG. 1 includes a car navigation system 10, an information provider 11, an information center 12 for collecting information from the information provider 11 corresponding to the request of the car navigation system 10 and processing the information, a mobile communication terminal 13, a wireless communication network 14 for transmitting the information processed in the information center 12 to the mobile communication terminal 13 and transmitting a request signal from the car navigation system 10 to the information center 12, and a communication adaptor 15 for connecting information transmission and reception between the mobile communication terminal 13 and the car navigation system 10.

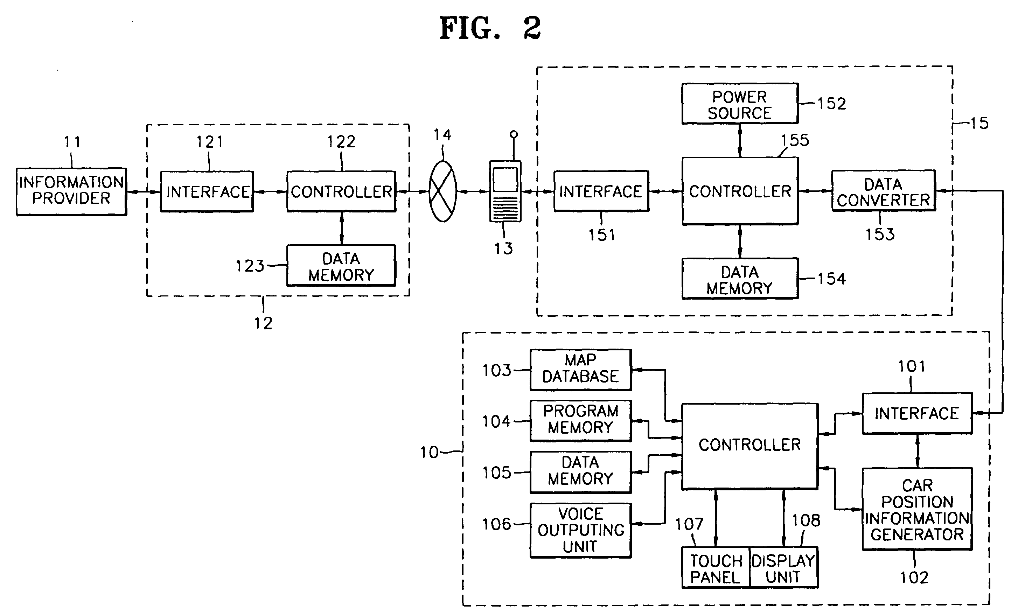

FIG. 2 shows the car navigation system 10, the information center 12, and the communication adaptor 15, shown in FIG. 1 in detail.

The car navigation system 10 includes an interface 101, a car position information generator 102 for generating information about the location of a car using car information data received through the interface 101, a map database 103 into which road and map information is loaded, a program memory 104 in which a program for guiding the user as to the optimal traveling distance and time of a car is stored, a data memory 105 in which various information processed in the information center 12 is stored, a voice outputting unit 106 for outputting information requested by a driver as voice, a touch panel 107 for receiving information to be searched for by the driver, a display unit 108 on which the information requested by the driver is displayed, and a controller 109 for transmitting a drivers information request signal and controlling the information received through the interface 101 to be combined with the data of the car position information generator 102, the map database 103, and the program memory 104, and to be stored and displayed.

The information center 12 is comprised of an interface 121, a controller 122 for receiving an information request signal of the car navigation system 10, collecting information corresponding to the information request signal through the interface 121, and processing and transmitting the information, and a data memory 123 for storing the information processed in the controller 122.

The communication adaptor 15 includes an interface 151, a power source 152, a data converter 153 for converting a specific data protocol received through the interface 151 into a protocol by which it is possible to transmit information to the car navigation system 10 and to receive information from the car navigation system 10, a data memory 154 for storing the information received through the interface 151, and a controller 155 for controlling the mobile communication terminal 13, the protocol conversion, and the storage of the information received from the mobile communication terminal 13.

The present invention will be described in detail with reference to FIGs. 1 and 2.

The car navigation system 10 is installed in the car as an information terminal together with the mobile communication terminal 13 and the communication adaptor 15. Accordingly, the driver requests required information from the car navigation system 10 and receives various information corresponding to the required information.

The car navigation system 10 provides various information to the driver using an electronic map and a global position system (GPS) satellite which are not shown. The car navigation system 10 receives radio waves from the GPS satellite and displays the current position and the traveling direction of a car on an electronic map. As a result, the driver can know the shortest path to the destination of the car. Also, when an auto vehicle location system (AVLS) is connected to a communication network for the convenience of the driver, the driver can obtain information on accidents and stolen cars.

When the driver desires to monitor the traffic situation of the road, the car navigation system 10 installed in a car can operate as a car audio system, a voice sensor, a car related information and geography displayer, and a communication system.

The car position information generator 102 generates information on the current position of the car by the data received from the GPS satellite. Here, the car position information generator 102 includes a GPS receiver. It is possible to obtain optimal traffic information by calculating not only the position of the car but also the speed of the car and the time taken to reach the destination through the GPS satellite.

Also, it is possible to search for the position of either a car A or a car B each having the same system through the car position information generator 102 and the information center 12. The car A transmits the information request signal to the information center 12 together with the ID or the telephone number of the car B the position of which is to be searched. The information center 12 requests an approval for a position information search to the car B. When the car B approves the position information search of the information center 12, the information center 12 transmits the position information of the car B to the car A.

The map database 103 is stored on a storage medium such as a compact disk-read only memory (CD-ROM) in the form of road and map information. Information on the class, the shape, and the section of the road and restrictions on the road is stored in the map database 103.

The program memory 104 stores the program for guiding the user as to the optimal traveling distance and time of the car.

The data memory 105 stores various traffic information and information for personal use processed periodically or non-periodically in the information center 12, centering around information which is often used by the driver.

The voice outputting unit 106 includes a speaker and outputs the information requested by the driver as a voice.

The touch panel 107 is an input apparatus for inputting information to be searched by the driver. The display unit 108 displays the information requested by the driver. For example, when icons representing traffic information, information for personal use, an emergency service and so on are displayed on the display unit (108), the driver touches the icon relating to desired information thereby obtaining the information relating thereto by voice or by a screen.

The controller 109 transmits the information request signal corresponding to the search information input by the driver through the touch panel 107 to the outside through the interface 101 and receives external information through the interface 101 in response to the information request signal.

When information on the car position is to be searched among the items of the traffic information input by the driver through the touch panel 107, the controller 109 receives the position information of the car input to the car position information generator 102 and the optimal traveling distance and time of the car stored in the program memory 104, induces and calculates the traveling path and time and controls the result value to be combined with the road and map information stored in the map data base 103 and displayed the combined result. Also, the controller 109 controls such information to be output as voice through the speaker.

When the search information input by the driver through the touch panel 107 is information for personal use such as news and weather, the controller 109 receives the information from the outside through the interface 101, stores the received information in the data memory 105, and displays the stored information on the display unit 108 or outputs the information as voice through the speaker.

When the search information input by the driver through the touch panel 107 is for an emergency service, the controller 109 controls the transmission of the information on the current state of the car to be transmitted to the information center 12. If the information center 12 receives the information on the current state of the car, it generates new traffic information or detects the operation signal of an air bag when an accident happens, and provides the emergency service. Accordingly, it is possible to prevent accidents. Even if the driver does not select the emergency service, the controller 109 periodically or non-periodically transmits information on the current state of the car to the information center 12, thus preventing accidents from happening.

The information provider 11 provides various items of information requested by the driver. For example, the information provider 11 contacts the Road Traffic Safety Association and provides the traffic information searched for by the driver. The Road Traffic Safety Association provides traffic flow information showing the speed in each direction of a section of the road, information on accidents by displaying the occurrence of accidents and positions where the accidents happen on a map, and control information, etc. to the information provider 11. The information provider 11 contacts a communication company via personal computer (PC) and provides various items of information for personal use such as news, weather, and events. The information provider 11 periodically or non-periodically contacts the Road Traffic Safety Association or the PC communication company and updates the latest information.

The information center 12 receives the intrinsic ID 10 and the information search request of the car navigation system, collects information corresponding thereto, processes the information, and transmits the information to the mobile communication terminal 13 through the wireless communication network 14.

The controller 122 receives the ID and the information search request of the car navigation system 10, searches for information corresponding thereto, stores the information in the data memory 123, and changes the information into a Transmission Control Protocol/Internet Protocol (TCP/IP) which is a communication format for transmitting the information to the mobile communication terminal 13 through the wireless communication network 14.

The controller 122 includes a collector for collecting information provided by the information provider 11, a processor for processing the information to a set communication format, a searching unit for searching the information stored in the data memory 123, a transmitter for transmitting the searched information to the wireless communication network 14, a connector for connecting arbitrary information to an arbitrary apparatus or system, a transmitter for transmitting information to an arbitrary apparatus or system, and an information request receiver for receiving the information request of the car navigation system 10.

The data memory 123 is a medium for storing the information provided by the information provider 11, centering around the information for which a search is often requested. The information stored in the data memory 123 is periodically or non-periodically processed thereby, providing the latest information when the search is requested.

The mobile communication terminal 13 contacts a wireless communication network 14 such as a cellular network, a personal communication system (PCS) network, or a group special mobile (GSM) network through a wireless communication line. Here, the mobile communication terminal 13 can be replaced by an information terminal or a notebook personal computer having a MODEM or an integrated services digital network (ISDN) adaptor.

The mobile communication terminal 13 is a mobile communication terminal module which is portable and has a built in communication terminal or information terminal and can be attached to and released from a cradle in the car. The mobile communication terminal 13 contacts the wireless communication network 14, opens a call connection between two points, stops the opened call, and supports a telephone conversation during the opening of the call. Telephone call information is generated after classifying the form of reception when a telephone call is made or a signal which means the opening of a data reception call is received. Also, the mobile communication terminal 13 periodically transmits data to a station and periodically receives data from the station and generates field intensity (indirectly displays telephone call success rate) information, information on whether the mobile communication terminal is out of range, information on the charge level of a battery which is used as an operation power source, or information on the remaining capacity of the battery. The received information can be displayed on the screen included in the mobile communication terminal 13 or can be output as voice through the speaker.

The wireless communication network 14 supports a telephone call and the transmission and the reception of wireless data between a plurality of mobile communication terminals 13 and the transmission and the reception of wireless data between arbitrary systems, i.e., the information center 12 and the mobile communication terminal 13.

The communication adaptor 15 relays transmission and reception of information between the mobile communication terminal 13 and the car navigation system 10. The communication adaptor 15 converts protocols of the mobile communication terminal 13 and the car navigation system 10, thus letting information be exchanged, and monitors the power source of the mobile communication terminal 13.

The communication adaptor 15 receives all the information of the mobile communication terminal 13 and includes a microphone (not shown) or a speaker (not shown) to perform a hands free function during the transmission or the reception of a telephone call in a connection state. The communication adaptor 15 receives communication state information such as field intensity information and out of range information generated by the mobile communication terminal 13, information on the operation state of the mobile communication terminal 13 such as line busy or the mobile communication terminal is operated, information on the classification of the forms of the respective receptions when a telephone call is received or a large or small amount of wireless data is received, information for informing the user of a simple reception failure or message data transmitted by another party and telephone number data of another party when the reception of the telephone call fails, and data received and stored by the mobile communication terminal 13 and the telephone number stored by a user after the wireless data is received.

Also, when the communication adaptor 15 is installed in a car, the communication adaptor 15 may be connected to various electronic controlling apparatuses such as an air bag, thereby monitoring the states of the respective controlling apparatuses and receiving the operation state information (for example, engine malfunction information and air bag inflation information). When the communication adaptor 15 is connected to a car audio system (not shown), the communication adaptor 15 supports making a telephone call with good sound quality by selectively muting the audio signal of the car audio which can prohibit the telephone call when the telephone call is received during the operation of the car audio.

The controller 155 receives information from the mobile communication terminal 13 input through the interface 151 and controls the received information to be sequentially stored in the data memory 154. Also, the controller 155 supports a telephone conversation when a reception signal is received from the mobile communication terminal 13 and/or the car navigation system 10. When the controller 155 receives a request for information from the driver through the data converter 153, the controller 155 accesses the information stored in the data memory 154 and outputs the information to the car navigation system 10 through the data converter 153.

The controller 155 comprises a searching unit for searching the information received from the car navigation system 10 or the mobile communication terminal 13, stored in the data memory 154, an information processor for processing the received information together with the searching unit, an information receiver for receiving an information request when information is requested from the car navigation system 10 or the mobile communication terminal 13, a transmitter for transmitting the information requested by the car navigation system 10 or the mobile communication terminal 13 to an apparatus which can process the information, and an error monitor for monitoring errors generated during transmission.

The data converter 153 loaded with a plurality of standard network protocols and a plurality of car local area network (LAN) protocols converts between protocols of the information center 12 and the car navigation system 10, each having different protocols. The data converter 153 converts J1850 corresponding to the car LAN protocol into a network protocol such as TCP/IP when the car navigation system 10 requests an information search and converts the network protocol such as TCP/IP into the J1850 protocol corresponding to the car LAN protocol when the information is transmitted to the car navigation system 10.

The power source 152 applies a charging voltage to the mobile communication terminal 13 through the interface 151, checks the voltage by charge presence data generated from the mobile communication terminal 13, and senses the malfunction of the battery.

The present invention will be described as follows in respect to the bi-directional information transmission/reception servicing method.

When a driver wishes to search for information during traveling, the driver inputs data with respect to the information to be searched to the touch panel 107 of the car navigation system 10. The controller 109 controls the data input together with an intrinsic ID through the touch panel 107 to be output to the interface 101. The interface 101 outputs the data and the intrinsic ID output from the controller 109 to the data converter 153 of the communication adaptor 15. The data converter 153 converts the J1850 protocol corresponding to local area network protocol of the car navigation system 10 into the network protocol such as TCP/IP. The controller 155 outputs the driver information search request signal converted by the data converter 153 to the interface 151. The interface 151 outputs the information search request data and the intrinsic ID of the driver, output from the controller 155, to the mobile communication terminal 13. The mobile communication terminal 13 transmits the information search request data and the intrinsic ID of the driver, output from the interface 151, to the wireless communication network 14. The wireless network 14 outputs the information search request data and the intrinsic ID of the driver, received from the mobile communication terminal 13, to the information center 12. The controller 122 of the information center 12 collects the information search request data of the driver according to the ID and outputs the information search request data to the information provider 11 through the interface 121.

The information provider 11 searches for the drivers requested information received from the information center 12 and transmits the searched information to the information center 12. The information center 12 collects and processes the information provided from the information provider 11 and transmits the collected and processed information to the wireless communication network 14. The information through the wireless communication network 14 and the mobile communication terminal 13 is input to the controller 155 through the interface 151 of the communication adaptor 15. The information input to the controller 155 is input to the data converter 153 which converts the network protocol such as TCP/IP into the J1850 car LAN protocol. The converted information is input to the controller 109 through the interface 101 of the car navigation system 10. The controller 109 processes the information received through the interface 101 and displays the information on the displayer 108 or outputs the information to the voice outputting unit 106 in which the speaker is installed.

The present invention is not restricted to the above embodiments, and it is clearly understood that many variations are possible within the scope and spirit of the present invention by anyone skilled in the art.

According to the above-mentioned present invention, it is possible to perform bidirectional wireless information transmission and reception between the information center and the car navigation system. Accordingly, it is possible to maximize the efficiency of a user since it is possible to receive correct traffic information and various items of information for personal user and to provide all the information by the car navigation system.

## Claims

1. A bidirectional information transmitting and receiving system, comprising:
an information center for collecting, processing, and then transmitting predetermined information provided from the outside in response to an information request signal;
an information terminal for outputting the information request signal to the information center and for searching for information received from the information center;
a mobile communication terminal for performing wireless communication with the information center through a mobile communication line to transmit or receive information to or from the information center; and
a communication adaptor for relaying information between the mobile communication terminal and the information terminal.

2. The bidirectional information transmitting and receiving system of claim 1, wherein the information center periodically or non-periodically provides traffic information, information for personal use, and emergency service information.

3. The bidirectional information transmitting and receiving system of claim 1, wherein the information center comprises controlling means for collecting and processing information provided from the outside and transmitting the processed information to the mobile communication terminal through a wireless communication network when the information request signal is received from the information terminal.

4. The bidirectional information transmitting and receiving system of claim 3, wherein the controlling means comprises:
an information request receiver for receiving the information request of the information terminal;
a collector for collecting information from the outside in response to the receipt of the information request;
a processor for processing the collected information to a set communication format;
a searching portion for searching for the information collected in the collector; and
a transmitter for transmitting the information searched for by the searching portion.

5. The bidirectional information transmitting and receiving system of claim 1, wherein the information terminal comprises:
storage means for collecting and storing the information transmitted from the information center through the communication adaptor and the mobile communication terminal;
information pickup-out means for collecting the information stored in the storage means and picking out information desired by a user; and
outputting means for outputting the information picked out by the information picking-out means.

6. The bidirectional information transmitting and receiving system of claim 5, wherein the information calculating means comprises:
a map data base in which road and map information is stored;
position information generating means for generating the current position of a traveling car by data received from a global position system (GPS) satellite; and
controlling means for calculating optimal traveling path and time according to the current position of the car, generated by the position information generating means, reading map information corresponding to current position information from the map data base, and outputting the map information to the outputting means.

7. The bidirectional information transmitting and receiving system of claim 1, wherein the communication adaptor comprises:
controlling means for letting a telephone conversation be made, storing the information transmitted from the mobile communication terminal in a memory when a reception signal is received from the mobile communication terminal and the information terminal, and accessing information from the memory corresponding to an information search request when the information search request is received from the information terminal; and
data converting means for converting a communication protocol into a car wireless protocol and the car wireless protocol into the communication protocol between the mobile communication terminal and the information terminal.

8. The bidirectional information transmitting and receiving system of claim 7, wherein the controlling means comprises:
a memory for contacting the information terminal and storing the information received from the mobile communication terminal or the information terminal;
a searching unit for searching the information stored in the memory;
an information processor for operating or processing the information stored in the memory;
an information receiver for receiving requested information from the mobile communication terminal or the information terminal respectively;
a transmitter for transmitting the information received from the information receiver to the mobile communication terminal or the information terminal; and
an error monitor for monitoring errors generated during the transmission of information by the transmitter.

9. A bidirectional information transmitting and receiving method in a bidirectional information system comprising an information terminal for searching traffic information and predetermined information, an information center for collecting, processing, and transmitting information, a mobile communication terminal for transmitting and receiving wireless communication and information through a mobile telephone line, and a communication adaptor for relaying information between the mobile communication terminal and the information terminal, comprising the steps of:
outputting an intrinsic ID and a search information request signal operated in the information terminal to the communication adaptor and relaying request information corresponding thereto;
transmitting the ID and the search information request signal, through the mobile communication terminal to the information center;
searching for information corresponding to the transmitted intrinsic ID and the information request signal, processing the searched information to a signal format, and transmitting the formatted signal to the mobile communication terminal corresponding to the intrinsic ID; and
transmitting the information received from the mobile communication terminal to the communication adaptor, converting the information into a communication protocol of the information terminal, and outputting information converted into the communication protocol to the screen and the speaker of the information terminal.
